**Europäisches Patentamt**

**European Patent Office**

**Office européen des brevets**

(19)

(11) Veröffentlichungsnummer: **0 148 968**

**B1**

(12) **EUROPÄISCHE PATENTSCHRIFT**

(45) Veröffentlichungstag der Patentschrift:
13.01.88

(51) Int. Cl.⁴: **B 64 C 39/02,** B 64 D 37/00

(21) Anmeldenummer: **84100428.6**

(22) Anmeldetag: **17.01.84**

(54) Flugkörper.

(43) Veröffentlichungstag der Anmeldung:
24.07.85 Patentblatt 85/30

(45) Bekanntmachung des Hinweises auf die Patenterteilung:
13.01.88 Patentblatt 88/2

(84) Benannte Vertragsstaaten:
FR GB IT SE

(56) Entgegenhaltungen:
GB-A-2 094 739
GB-A-2 104 853
US-A-4 306 693

AVIATION WEEK & SPACE TECHNOLOGY, Band 112, Nr. 4, Januar 1980, Seiten 54,55,58,61,63, New York, US;B.M. ELSON: "Mini-RPV being developed for army"
AVIATION WEEK & SPACE TECHNOLOGY, Band 119, Nr. 3, Juli 1983, Seiten 67-68, New York, US; B.A. SMITH: "Israeli use bolsters interest in Mini-RPVs"

(73) Patentinhaber: **DORNIER GMBH, Postfach 1420, D-7990 Friedrichshafen 1 (DE)**

(72) Erfinder: **Frühauf, Werner, Ing. grad., Unterer Höhenweg 24, D-7775 Bermatingen (DE)**

(74) Vertreter: **Landsmann, Ralf, Dipl.- Ing., Kleeweg 3, D-7990 Friedrichshafen 1 (DE)**

## Beschreibung

Die Erfindung betrifft aus zu Batterien zusammengeschlossenen Behältern startende Flugkörper, deren Antriebsanlage mit dem Tragwerk montierbare und mit den Flügeln tragende Strukturteile bildende Kraftstoffbehälter, sowie Kraftstoffentnahmevorrichtungen enthält, insbesondere Flugkörper, deren Tragwerk in der Art von Deltaflügeln stark gepfeilt ausgebildet ist.

Bei unbemannten Flugkörpern der genannten Stand der Technik bildenden Art, insbesondere solchen, die in übereinender und bzw. oder nebeneinander gestapelt angeordneten Behältern gelagert, transportiert und auch aus diesen Behältern gestartet werden, ist oft die Forderung zu erfüllen, die Flugkörper ohne Treibstoff zu lagern bzw. zu transportieren. Dabei muss jedoch auch die Forderung erfüllt werden, die Flugkörper in möglichst kurzer Zeit startbereit zu machen, wobei die Startvorbereitungen auch den Betankungsvorgang einschliessen.

Besondere Probleme ergeben sich für die Betankung dadurch, dass die Flugkörper in Startbehältern untergebracht und infolge der über- und nebeneinander angeordneten Behälter nur über die Startöffnung zugänglich sind. Es bestehen in den genannten Fällen erhebliche Schwierigkeiten, und zwar sowohl im Hinblick auf die Anordnung der Betankungsvorrichtung und insbesondere in bezug auf die Anordnung der Betankungsanschlüsse zwischen Kraftstoffzuführung und Kraftstoffbehälter. Der Betankungsvorgang erfordert einen erheblichen Aufwand an Zeit und dazu notwendiges Gerät, insbesondere wenn eine Anzahl von Fluggeräten einer Behälterbatterie in kurzen Abständen nacheinander gestartet werden soll. Ein Abbruch der Startvorbereitung und Verschiebung des Starts auf einen späteren Zeitpunkt kann die Entleerung der Kraftstoffbehälter erfordern.

Es sind durch die GB-A-2 094 739 Treibstofftanks für Flugzeuge bekannt, die als Strukturteil des Tragflügels dienen. Die Treibstofftanks sind im Wurzelquerschnitt mit verstärkten Platten ausgestattet, die Laschen zur Montage von Tragflügel und Flugzeugrumpf mittels Verschraubungen aufweisen.

Es ist ferner durch die GB-A-2 104 853 ein austauschbarer Kraftstoffbehälter für Flugkörper bekannt, der dafür geeignet ist, aus einem Lager in eine Ausnehmung im Nasenbereich des Flugzeugrumpfes eingesetzt zu werden, um die notwendige Treibstoffmenge für das Fluggerät bereitzustellen. Die Kraftstoffbehälter sind hierbei nicht Teil der tragenden Struktur des Tragflügels.

Aufgabe der vorliegenden Erfindung ist es, die den bekannten Ausbildungen bzw. Anordnungen bezüglich der Betankung anhaftenden Nachteile zu beseitigen und so zu verbessern, dass für den Betankungsvorgang nur ein äusserst geringer Zeitaufwand und ein minimaler Aufwand an Gerät erforderlich ist.

Die gestellte Aufgabe ist, wie durch die Merkmale des Hauptanspruches angegeben, gelöst.

Die erfindungsgemässe Ausbildung ermöglicht die Kraftstoffbehälter für den Transport und die Lagerung der in die Startbehälter eingesetzten Flugkörper getrennt mitzuführen. Der für die Startvorbereitung der Flugkörper erforderliche Zeitaufwand wird durch die Möglichkeit, gefüllte Kraftstoffbehälter in die Flugkörper einsetzen zu können, erheblich verringert.

Auch der Aufwand an Gerät zum Einsetzen bzw. Auswechseln der Kraftstoffbehälter ist gegenüber der Betankung bei festeingebauten Behältern und entsprechenden Betankungseinrichtungen wesentlich geringer. Tankfahrzeuge brauchen sich zumindest nicht unmittelbar im Bereich der Starteinrichtung aufzuhalten.

Für den Einbau auswechselbarer Kraftstoffbehälter eignen sich insbesondere Deltaflügel, bei denen im Bereich der Flügelwurzel vor dem Flügelvorderholm ausreichend Raum für die Aufnahme der Kraftstoffbehälter zur Verfügung steht, insbesondere im Hinblick auf Festigkeits- und Gewichtsoptimierungen der Struktur der Tragflügel. Die tragende Struktur der Flügel soll durch die auswechselbare Aufnahme der Kraftstoffbehälter nicht gestört werden.

In der Zeichnung ist ein Ausführungsbeispiel gemäss der Erfindung dargestellt, das nachfolgend näher beschrieben ist.

Es zeigt:

Fig. 1 den gesamten Flugkörper in perspektivischer Darstellung,

Fig. 2 ebenfalls in Perspektive den Zellenaufbau des Flugkörpers,

Fig. 3 in schematischer Darstellung und in Perspektive Flugkörper in Verbindung mit Aufnahme- bzw. Startbehältern,

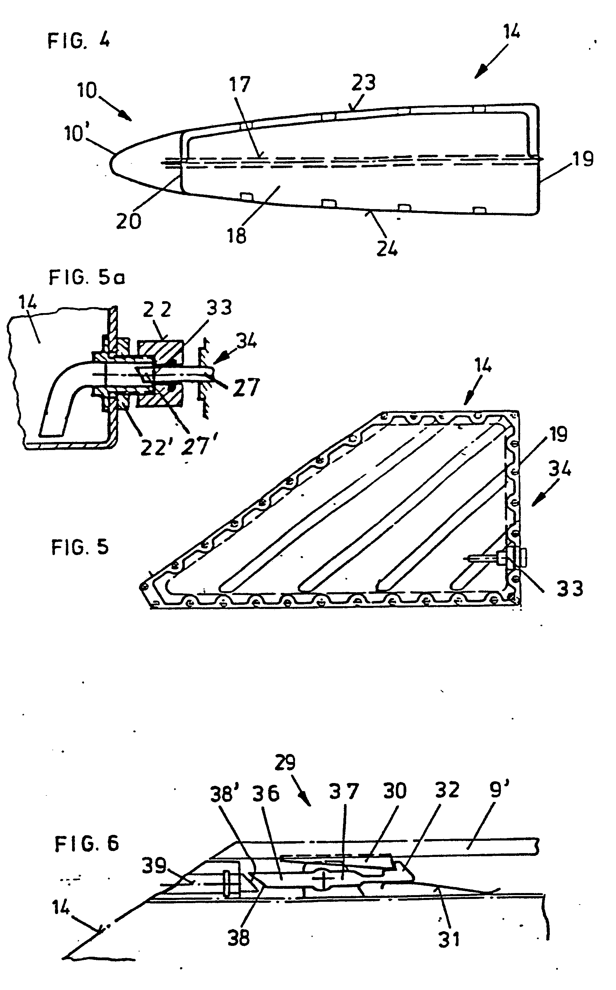

Fig. 4 einen Kraftstoffbehälter im Querschnitt,

Fig. 5 den Kraftstoffbehälter gemäss Fig. 4 in Draufsicht,

Fig. 5a in einem Ausschnitt aus Fig. 5 Einzelheiten der Kraftstoffentnahmevorrichtung und

Fig. 6 in einem Ausschnitt aus Fig. 2 Einzelheiten der Behälterverriegelung, längsgeschnitten dargestellt.

Wie die Zeichnung erkennen lässt ist der Flugkörper insgesamt mit 1, dessen Rumpf mit 2 und die Deltaflügel mit 4 bezeichnet. Das Rumpfheck weist eine für den Marschflug vorgesehene Antriebsanlage 3 auf, die einen Kolbenmotor für den Antrieb eines Propellers 5 enthält.

Die Flügel 4 setzen sich in üblicher Bauweise zusammen aus Vorder- Mittel- und Hinterholm 8, 8' bzw. 8'', den Rippen 9, Versteifungsstreben 11 sowie der Beplankung 7.

Erfindungsgemäss sind die freien Räume 12 zwischen den Flügelrippen 9 bzw. 9' im Bereich der Flügelwurzel 6 und dem Vorderholm 8 vorgesehen für die austauschbare Aufnahme von Kraftstoffbehältern 14. Zu diesem Zweck sind an den Flügelrippen 9, 9' in Richtung der Flügeltiefe verlaufende Trag- bzw. Führungsschienen 18 angeordnet, in die entsprechend ausgebildete Trag- bzw. Führungsteile 17 an den Seitenwänden 18 der Behälter 14 eingreifen. Die Behälterrückwand 19 enthält den Entnahmeanschluß 22 für die Kraftstoffzuführung zum Antriebsmotor im Rumpfheck, was später noch näher beschrieben ist. Die Behälteroberwand 23 bzw. die Behälterbodenwand 24 bilden gleichzeitig den Beplankungsabschnitt der Flügel 4 im Bereich der Räume 12, die zur Aufnahme der Behälter 14 dienen. Ferner trägt die vordere Behälterwand 20 den die Flügelnase 10 ergänzenden Beplankungsabschnitt 10'. Die Kraftstoffbehälter 14 bilden somit selbst einen Abschnitt der Flügelbeplankung 7.

Zur Aufnahme der Behälter 14 am Flugkörper 1 sind Arretierungen vorgesehen, die sich aus je um eine Achse schwenkbaren Verriegelungshebel 29 an den Rippen 9 bzw. 9' des Flügelrahmens und Einrastgliedern 30 an den Behältern 14 zusammensetzen. Die Verriegelungshebel 29 besitzen zwei Hebelarme 36 bzw. 37 und werden durch Federelemente 31 in Verriegelungsstellung gehalten, in der sie mit Rastvorsprüngen 32 in die Einrastglieder 30 eingreifen. Für das Entriegeln der Kraftstoffbehälter 14 vom Flugkörper 1 sind von Hand in Bohrungen des Flügels längsverschiebliche Stangenteile 39 einsetzbar, die über eine angeschrägte Fläche 38' und eine Gegenfläche 38 an den Hebeln 29 eine Schwenkbewegung der Hebel 29 im Sinne einer Entriegelung bewirken.

Für den selbsttätigen Zusammenschluß der Kraftstoffbehälter 14 mit der Kraftstoffleitung 27 der Antriebsanlage 3 sind Kraftstoffentnahmevorrichtungen 34 vorgesehen. Die Vorrichtungen enthalten am Behälter 14 bzw. an der Leitung 27 Steckkupplungselemente 22 bzw. 22', die in Endeinschubstellung der Behälter 14 abdichtend ineinander eingreifen. Den Abschluß des gefüllten Kraftstoffbehälters 14 bildet eine Membran 33, die beim Einbringen des Kraftstoffbehälters 15 in seine Endeinschubstellung von einem Rohrendteil 27' am Element 22' durchstossen wird und den Behälterinnenraum an die Entnahmeleitung 27 anschliesst.

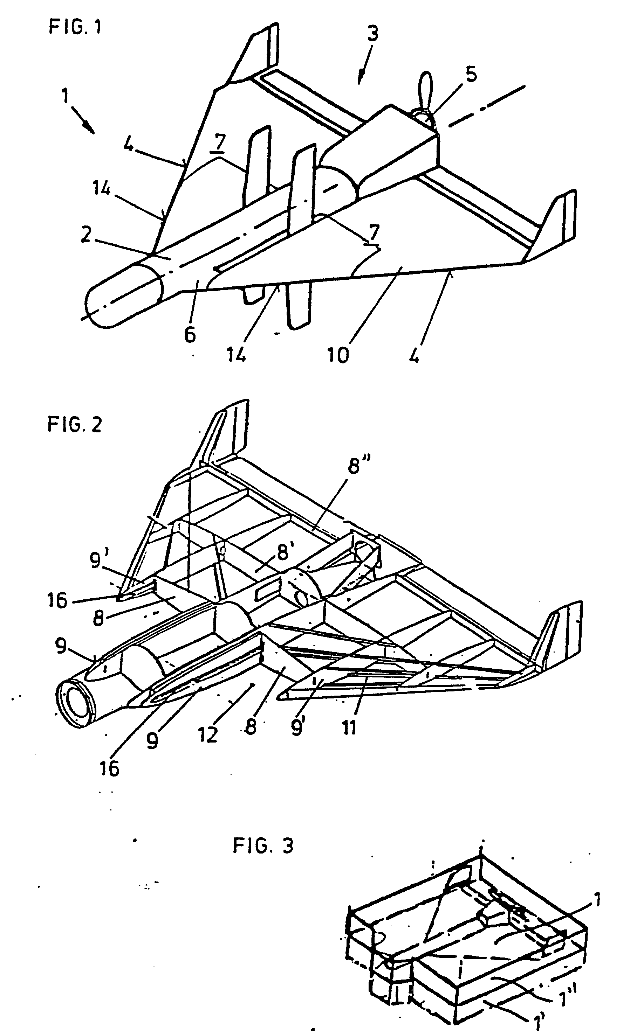

Ferner ist aus Fig. 3 eine gestapelte Anordnung von Aufnahmebehältern 1' bzw. 1'', wie allgemein bekannt, ersichtlich. Die Behälter dienen gleichzeitig zur Lagerung zum Transport und zum Starten der Flugkörper 1.

Für den Start weisen die Behälter entsprechende Startöffnungen an ihrer Vorderseite auf. Infolge der gestapelten Anordnung sind die Behälter nur von vorn zugänglich.

## Patentansprüche

1. Aus zu Batterien zusammengeschlossenen Behältern startende Flugkörper, deren Antriebsanlage mit dem Tragwerk (4) montierbare und mit den Flügeln tragende Strukturteile bildende Kraftstoffbehälter (14), sowie Kraftstoffentnahmevorrichtungen (34) enthält, insbesondere Flugkörper, deren Tragwerk in der Art von Deltaflügeln stark gepfeilt ausgebildet ist, dadurch gekennzeichnet, dass
- das Tragwerk (4) zwischen Vorderholm (8) und einander benachbarten Rippen (9, 9') im Bereich der Flügelwurzel (6) von der Flügelnase (10) her zugängliche Aufnahmeräume (12) zur Aufnahme vorgefüllter Kraftstoffbehälter (14) aufweist, dass
- an den einander benachbarten Rippen (9, 9') bzw. dem Vorderholm (8) der Flügel (4) bzw. den Kraftstoffbehältern (14) zusammenwirkende Führungselemente (16; 17) und
- zur selbsttätigen Arretierung der Behälter (14) in ihrer Endeinschubstellung bzw. zur Freigabe der Behälter von der Flügelnase (10) her über Betätigungen (38) lösbare Verriegelungen (29, 30, 32) vorgesehen sind.

2. Flugkörper nach Anspruch 1, dadurch gekennzeichnet, dass die Kraftstoffentnahmevorrichtung (34) zwischen Kraftstoffbehälter (14) und Kraftstoffentnahmeleitung (27) für die Antriebsanlage (3), in der Art wie bei Steckkupplungen, lösbar ineinander abdichtend einrastende Kupplungselemente (22, 22') enthält.

## Claims

1. Aircraft which are launched from containers assembled in batteries, containing propulsion units with fuel tanks (14) forming structual parts which can be assembled with the wing unit (4) and which support the wings as well as fuel feeding devices (34) and in particular aircraft, the wing units of which are swept back in a pronounced manner in the form of delta wings, characterised in that
- the wing unit (4) is provided between the front spar (8) and ribs (9, 9') which adjoin each other in the area of the wing root (6) with receiving spaces (12) which are accessible from the wing nose (10) for accommodating prefilled fuel tanks (14), in that
- interacting guide components (16; 17) are provided at the ribs (9, 9') which are adjacent to each other and the front spar (8) of the wing (4) and the fuel tanks (14) and
- for the automatic locking of the tanks (14) in their final slide-in position or for releasing the tanks from the wing nose (10) by releaseable locking devices (29, 30, 32) via operating devices (38).

2. Aircraft according to claim 1, characterised in that the fuel feed device (34) contains coupling components (22, 22') which lock into each other in a releaseable manner with a sealing action between the fuel tanks (14) and the fuel feedline (27) for the propulsion unit (3) in a similar manner to plug-in couplings.

## Revendications

1. Engins volants lancés à partir de caissons groupés en batteries dont le système de propulsion comprend des réservoirs de carburant (14) pouvant être montés sur la voilure (4) et constituant, conjointement avec les ailes, des éléments de structure porteurs, ainsi que des dispositifs de prise de carburant (34), en particulier des engins volants dont la voilure présente une forme en flèche fortement accentuée à la manière des ailes delta, caractérisés en ce
- que la voilure (4) présente, entre le longeron avant (8) et des nervures voisines (9, 9'), dans la région de l'emplanture des ailes (6), des espaces de réception (12) accessibles par le nez des ailes (10) pour la mise en place de réservoirs de carburant (14) remplis préalablement;
- que des éléments de guidage coopérants (16; 17) sont prévus sur les nervures voisines (9, 9') sur le longeron avant (8) des ailes (4) et respectivement sur les réservoirs de carburant (14) et
- que des verrouillages (29, 30, 32) déverrouillables par des organes de manoeuvre (38) sont prévus pour le blocage automatique des réservoirs (14) dans leur position d'engagement définitive et respectivement pour la libération des réservoirs à partir du nez des ailes (10).
2. Engins volante selon la revendication 1, caractérisés en ce que le dispositif de prise de carburant (34) entre le réservoir de carburant (14) et la conduite de prise de carburant (27) pour le système de propulsion (3) comprend des raccords (22, 22') emboîtés l'un dans l'autre de façon étanche et séparables à la manière des raccords à emboîtement.

FIG. 1

FIG. 2

FIG. 3

FIG. 4

FIG. 5a

FIG. 5

FIG. 6